# EUROPEAN PATENT APPLICATION

(11) **EP 1 959 283 A1**
(43) Date of publication of application: **20.08.2008**
(21) Application number: 08250457.2
(22) Date of filing: 07.02.2008
(51) Int. Cl.: G02B 7/08, G02B 13/00, G03B 3/10

(54) **Lens module**

(30) Priority: 14.02.2007 GB 0702835
(71) Applicant: Johnson Electric S.A., 2300 La Chaux-de-Fonds (CH)
(72) Inventor: Nagasaki, Yasumasa, c/o Johnson Elect. Eng. Ltd., Tai Po, N.T. Hong Kong (HK)
(74) Representative: Hocking, Adrian Niall

(57) **Abstract**

A voice coil motor lens module 20 has a lens holder 29 adapted to carry a lens or lens assembly. The lens holder 29 supports a coil 30 which interacts with a permanent magnet field generated by one or more permanent magnets 31 supported by a magnet yoke 33. The maximum axial movement of the lens holder 29 is limited by the magnet yoke 33.

## Description

### Background of the Invention

Lens modules, especially autofocus lens modules, have a lens holder to which is mounted a single lens or lens assembly, simply referred to herein as a lens, for focussing an image onto an image plane. In use, the image plane would be an image sensor such as a CMOS or CCD device but in practice, the lens module is produced bare, meaning without the lens and without the image sensor which are fitted by the camera module maker. The lens module has a lens holder which is arranged to be driven by an actuator along a short straight path. Known actuators include DC motors, stepping motors, voice coil motors, ultrasonic motors and electrostrictive actuators including piezoelectric actuators.

There is a strong demand for small lens modules as small camera modules are being incorporated into more devices such as mobile phones and laptop computers and computer monitors. At the same time, the desire is for lower price and smaller size.

Voice coil motor driven lens modules have an advantage in price and as the size is reduced, provides satisfactory performance over a limited range of motion. Recent developments are shown, for example, in Japanese Patent Applications JP 2006-58662 and JP 2005-128405 by Shicoh Engineering Company Ltd.

One problem with current voice coil motor driven modules is that it is difficult to further reduce the overall size of the module, while maintaining the lens size, yet there is a strong demand to also increase the performance, in particular, the response time of the module to achieve focus from a resting position.

### Summary of the Invention

Thus, it is an object of the present invention to provide a lens module which can be made smaller and has a fast response time.

Accordingly, in one aspect thereof, the present invention provides a lens module for a camera or the like, comprising: a two part casing accommodating a magnet yoke, permanent magnet means providing a magnetic field, a lens holder for supporting a lens, a coil and spring means, the casing having an upper case and a lower case and means for interlocking the two, the magnet yoke having an annular form with an outer wall and a right cylindrical inner wall and a top wall joining the inner and outer walls at a top end thereof, the lower end being left open, the axial height of the inner wall being less than the axial height of the outer wall, the permanent magnet means comprising at least one permanent magnet fitted to an inner surface of the outer wall, the lens holder having a through aperture defining an optical axis, the through aperture being arranged to accommodate the lens, the lens holder having an upper axial end, a lower axial end and a radially outer surface, the radially outer surface includes at least one step and a circumferentially extending flange located towards the lower axial end, the lens holder being insertable into the magnet yoke such that an upper cylindrical portion of the lens holder confronts an inner surface of the inner wall of the magnet yoke and the lower axial end of the inner wall abuts the step to limit the axial movement of the lens holder through the magnet yoke, the spring means comprises two conductive springs each having an arcuate inner rim attached to the lower axial end of the lens holder and an outer rim attached to the lower case and having a terminal for connecting to a source of power, the inner and outer rims being respectively interconnected by at least one serpentine finger, wherein the springs are not stressed when the lens holder is in a park position and is stressed when the lens holder is in the fully extended position, the coil is fitted to the lens holder for movement therewith and lead wires thereof are respectively electrically connected to the inner rims of the springs, the coil being located at least partially between the magnet means and the inner wall of the magnet yoke, the magnet yoke being held between the upper and lower cases and the outer wall presses the outer rim of the springs to the lower case, an insulating member being disposed between the lower axial end of the outer wall and the springs to prevent direct contact there between, wherein the lens holder is caused to move from the park position to the fully extended position against the urgings of the springs by energising the coil.

Preferably, a cushion is disposed between the lens holder and the lower end of the inner wall of the magnet yoke to prevent direct contact there between in the fully extended position.

Preferably, a park cushion is disposed on the lower case such that in the park position the lens holder rests on the park cushion.

Preferably, the upper cylindrical portion of the lens holder has a plurality of axially extending ribs.

Preferably, a magnetic latch is provided between the lens holder and the lower case to retain the lens holder in the park position when the coil is not energised.

Preferably, the magnetic latch is arranged to cause tilting of the lens holder within the opening formed by the inner wall of the magnet yoke.

Preferably, the magnetic latch comprises a magnet element and a steel ball.

Preferably, the magnetic latch comprises a magnet element fixed to the lower case and magnetically attracting a component of the lens holder.

Preferably, the component of the lens holder is one of the springs which is of a magnetic, resilient and conductive material.

Optionally, the springs are of stainless steel.

Preferably, the lens module further comprises a top spring having an inner rim attached to the upper axial end of the lens holder and an outer rim attached to the upper case.

Preferably, the outer rim of the top spring is fixed to the upper case by the magnet yoke.

Preferably, the outer rim of the top spring is pressed against a ridge on an inner surface of the upper case, the ridge creating a void into which the top spring is deformable without contacting other portions of the upper case as the lens holder moves to the fully extended position.

Preferably, fingers on the lower case mate with grooves in the radially outer surface of the lens holder to guide the lens holder axially and to provide lateral support for the lens holder in the park position.

Preferably, the at least one magnet are four arcuate magnets.

Preferably, the outer wall of the magnet yoke is substantially square with chamfered corners and the four magnets are located at the corners.

Preferably, projections on the lower case hold the magnets against an inner surface of the top wall of the magnet yoke.

Preferably, the magnetic latch comprises two magnet elements located at diametrically opposed locations on the lower case and attracting two steel balls fixed to the lens holder, the tilt being caused by magnetic forces of attraction between the pairs of balls.

Preferably, the unequal magnetic attraction is caused by using magnet elements of differing magnetic strength.

Preferably, the unequal magnetic attraction is caused by a difference in separation distances between the pairs of elements.

Preferably, the unequal magnetic attraction is caused by misalignment between the elements of one of the pairs of elements.

Preferably, the tilting of the lens holder is caused by asymmetric placing of components of the magnetic latch.

### Brief Description of the Drawings

One preferred embodiment of the invention will now be described, by way of example only, with reference to the accompanying drawings, in which:
Figure 1 is a perspective view of a lens module according to a preferred embodiment of the present invention;
Figure 2 is an exploded view of the module of Figure 1;
Figure 3 is a sectional view of the module of Figure 1;
Figure 4 is a sectional view of the module, similar to Figure 3, with a part in an alternate position;
Figure 5 is a perspective view of a lower case, being a part of the module of Figure 1;
Figure 6 is a perspective view of an upper case, being a part of the module of Figure 1;
Figure 7 is a plan view of a lower spring, being a part of the module of Figure 1;
Figure 8 is a perspective view of a lens holder, being a part of the module of Figure 1;
Figure 9 is a perspective view of a lower side of the lens module of Figure 8;
Figure 10 is a perspective view of an upper spring, being a part of the module of Figure 1;
Figure 11 is a perspective view of a magnet yoke, being a part of the module of Figure 1;
Figure 12 is a perspective view of a lens module according to a second embodiment of the present invention;
Figure 13 is a sectional view of the module of Figure 12;
Figure 14 is a perspective view of a coil, lens holder and spring assembly of the module of Figure 12;
Figure 15 is a perspective view from below of the assembly of Figure 14;
Figure 16 is a perspective view of a magnet yoke of the module of Figure 12;
Figure 17 is a perspective view from below of the magnet yoke of Figure 16;
Figure 18 is a perspective view from below of an upper case of the module of Figure 12; and
Figure 19 is a perspective view of a lower case of the module of Figure 12.

### Detailed Description of the Preferred Embodiment

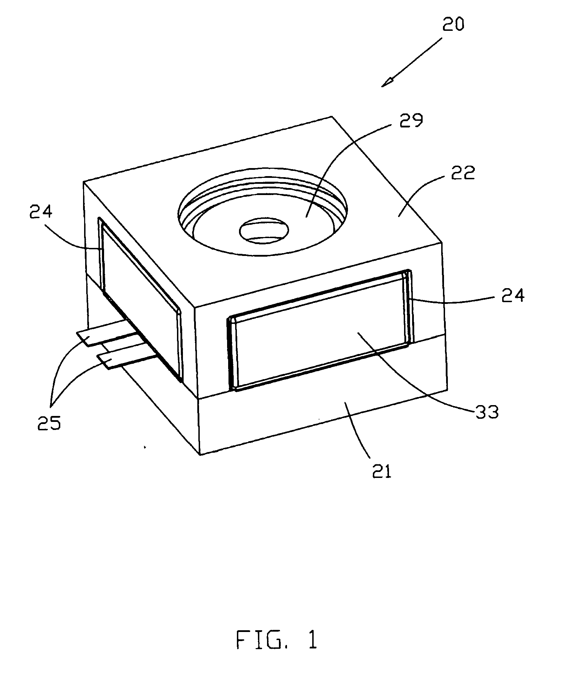

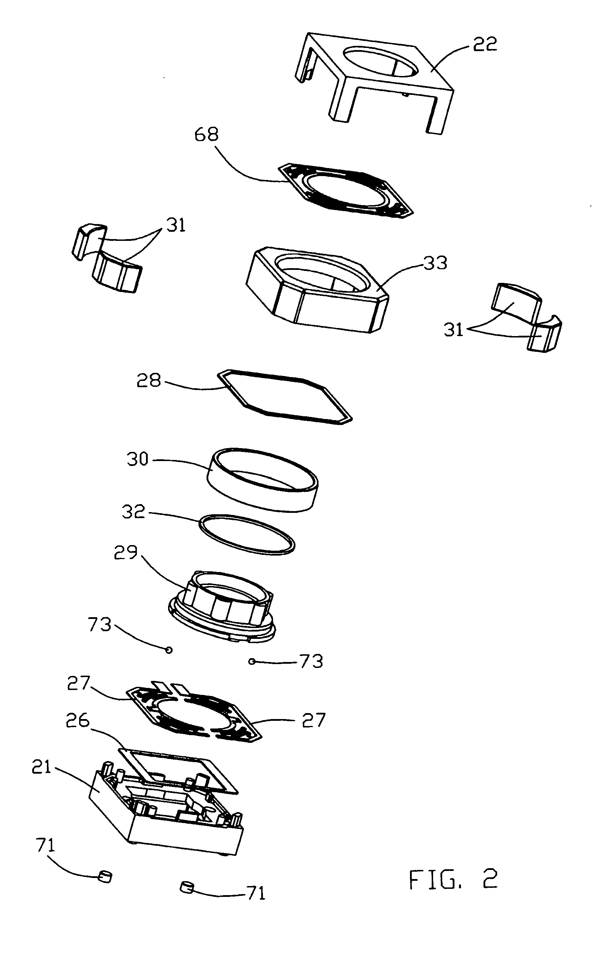

The preferred lens module 20 is shown assembled in Figure 1 and exploded in Figure 2. The outer appearance of the module 20 is like a squat square box measuring 10 by 10 by 5.2 mm. The module 20 has a two part casing with a lower case 21 and an upper case 22. The upper case 22 has a central hole 23 through which light from an image to be captured can pass. Additional openings 24 are formed in each side, formed by cutouts in the joining edges of the upper and lower cases. Through one of the side openings, two terminals 25 protrude for connecting the module 20 to a source of power.

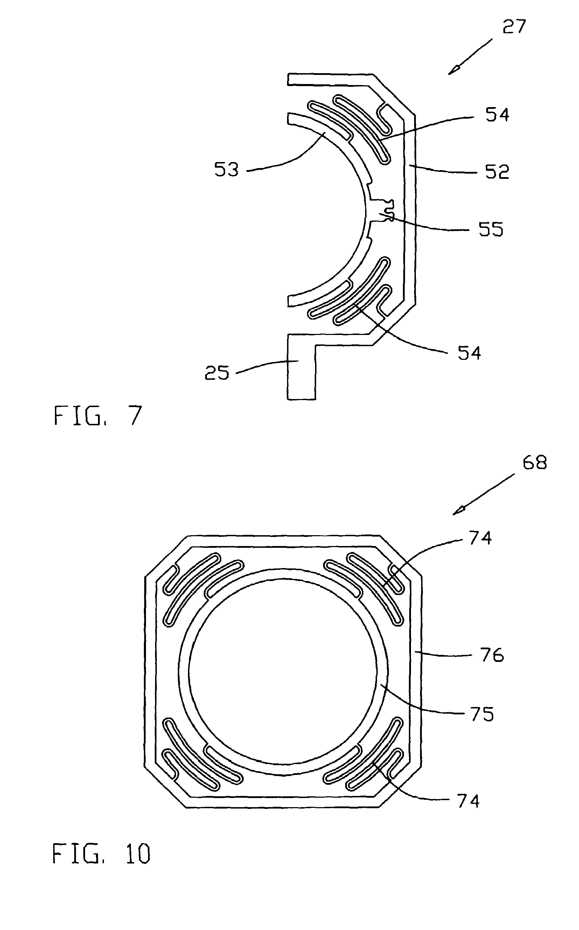

Referring to the exploded view of Figure 2, the components of the module 20 will be named starting from the bottom. At the bottom is the lower case 21. Fixed to the floor of the lower case 21 is a lower cushion 26. Fitted or placed into the lower case are two lower springs 27. An insulating member 28 is placed on top of an outer edge of the springs 27. A lens holder 29 is supported by the inner edge of the springs 27. A coil 30 surrounds the lens holder 24 and sits on a flange 34 of the lens holder 29. Four arcuate magnets 31 providing the permanent magnetic field are fitted inside a housing or magnet yoke 33 and locate in respective corners of the lower case 21. The upper case 22 presses down on the magnet yoke 33 and has four legs 35, one at each corner, which mate with four legs 36 extending upwardly from the corners of the lower case 21, thereby enclosing the magnet yoke 33. An upper spring 68 is pressed to a ridge 69 around the ceiling of the upper case 22 by the magnet yoke 33 and is fitted to an upper end 41 of the lens holder 29. The ridge 69 provides a void 70 into which the upper spring 68 can be deformed without hitting the ceiling or inner surface of the upper case 22 as the lens holder 29 moves. Upper spring 68 is shown in Figure 10 and has an inner rim 75 which engages the lens holder 29 and an outer rim 76 which engages the upper case 22. The inner and outer rims 75, 76, are interconnected by, optionally, four serpentine fingers or leaves 77.

Two small permanent magnets, called magnet elements 71, are fitted into recesses 72 in the lower case 21. The magnet elements 71 are located diametrically opposing one another across the optical axis of the module, preferably, as shown, midway along a face and thus midway between two of the magnets 31. The magnet elements 71 are positioned to align with two steel elements 73 fitted to holes 78 in the lower portion of the lens holder 29. The magnet elements 71 and steel elements 73 provide a magnetic latch to hold the lens holder 29 in the rest or parked position when the module is not active, i.e. when the coil in not energised. In the parked position, the lower springs 27 are unstressed, i.e., in their natural state with the magnetic latch supporting the lens holder 29 and gently urging it into contact with the lower cushion 26, thus preventing or minimizing damage to the lens and springs through rough handling when the device is not active. The upper spring 68 is also unstressed in the park position.

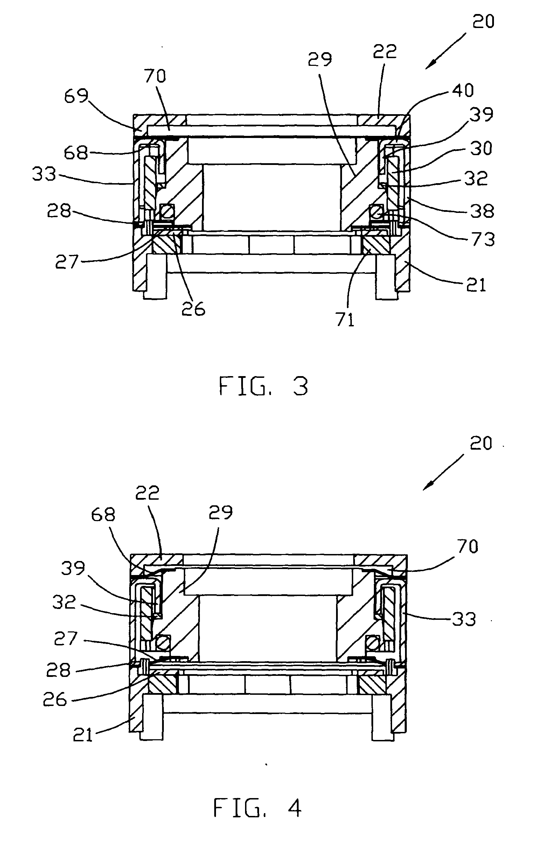

Figures 3 and 4 show the module in assembled form in sectional view. In Figure 3, the lens holder 29 is in the rest position or park position with the lens holder 29 resting against the lower cushion 26 fixed to the lower case 21. In Figure 4, the lens holder 29 is shown in the fully extended position as would be the case when the lens module is focussing on a very close object. In this position, the lens holder is shown pressing against an upper cushion 32 seated on a step 59 on the outer surface of the lens holder 29 to act as a buffer or cushion between the lens holder 29 and the magnet yoke 33. Optionally the upper and lower cushions are a ring of low density material, preferably elastomeric material such as foam rubber. In operation, the lens holder 29 moves from the rest position upwardly towards the upper case to focus the image, moving along the optical axis which is vertical as shown in Figures 3 and 4. When in the fully extended position, the lens holder 29 is at its closest position to the upper case 22. Thus, in use, the lens or lens holder 29 never extends from the case, maintaining the lens protected at all times. In the fully extended position, the lens holder 29 approaches the lower edge of the inner wall 39 of the magnet yoke 33 and the upper cushion 32 is provided to soften or prevent contact therebetween. Thus, the maximum movement of the lens holder 29 is determined only by the distance between the lens holder 29 and the magnet yoke 33, in particular, the lower edge of the inner wall 39 of the magnet yoke 33. Because few parts influence the moving distance, it is possible to make it small and precise. The usual distance is 0.3 mm although this design allows the range of movement to be controlled between 0.2 mm and 0.5 mm by using a larger diameter coil 30 which is possible by using the smaller corner magnets 31, which preferably are high strength magnets such as a rare earth magnet such as NdFeB, and also by using springs 27, 68 which are not under tension in the park position.

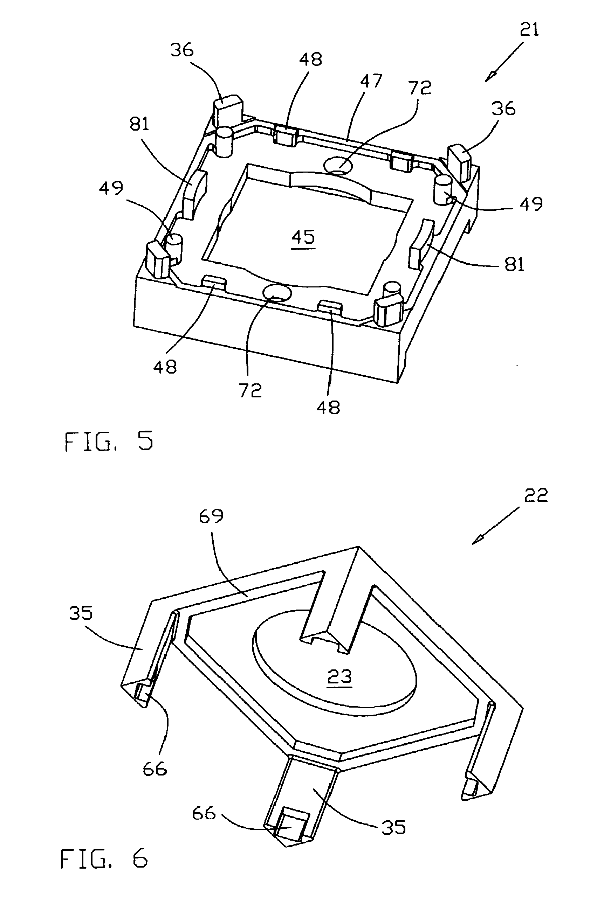

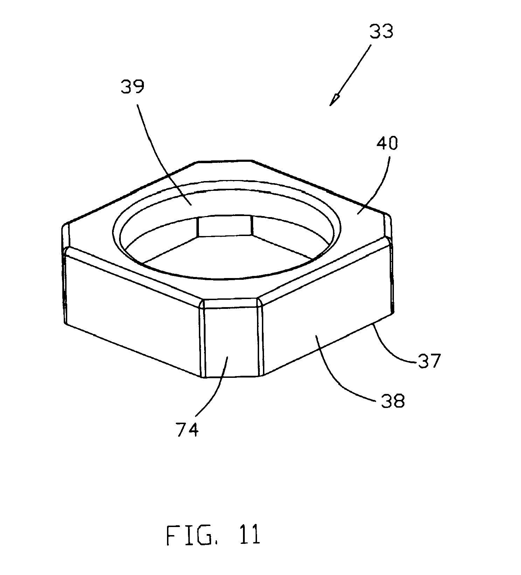

As can be seen in Figures 5, 2, and 11, the magnet yoke 33 is annular with an outer wall 38 and an inner wall 39. The outer wall 38 is substantially square with beveled or cut-off corners 74. The inner wall 39 is circular and concentric with the outer wall 38. The upper end of the magnet yoke 33 is closed by a top wall 40 extending between the inner and outer walls. The magnet yoke 33 is annular and open towards the bottom and the outer lower edge 37 sits on the insulation ring 28. The axial height of the outer wall 38 is greater than the axial height of the inner wall 39. The magnets 31 are fitted to the inner surface of the outer wall 38 of the magnet yoke 33 in the area of the beveled corners 74 and abut the inner surface of the top wall 40. Small posts 49 on the lower case 21 help position the magnets 31 axially.

As shown in Figure 3, the coil 30 is located between the inner and outer walls and faces the magnets 31 across a small air gap 42. The coil 30 is fitted on a radially outer surface of the lens holder 29 sitting on a flange 34. The lens holder 29 itself is a close clearance fit with the radially inner surface of the inner wall 39 of the magnet yoke 33. The upper outer surface of the lens holder 29 slides within the hole formed by the circular inner wall 39 of the magnet yoke 33. To reduce friction, the upper portion of the lens holder 29 has a number of axially extending ridges 61 so that should the lens holder tilt, due to shock or vibration or other reasons, the contact between the lens holder and the inner surface of the inner wall 39 will be only one or two line contacts and not a large area contact. However, as the upper end of the lens holder 29 is supported by the upper spring 68, in this embodiment, it is anticipated that it is only in severe shocks that the lens holder 29 will touch the magnet yoke 33.

The flange 34 of the lens holder 29, on which the coil 30 is seated, has two diametrically opposed holes or cutouts 57. These cutouts 57 provide access for the ends of the coil, lead wires 27, to pass through the flange 34 to be terminated on respective ones of the lower springs 27. The lower springs 27 are conductive and serve also as the connection connecting the terminals 25 to the coil 30.

The lower case 21, as shown in Figure 5, also has a central opening 45 through which the focussed image from the lens projects onto an image sensor which is to be mounted below the module. At the corners of the lower casing 21 are upwardly extending legs 36 arranged to mate with the legs 35 from the upper casing 22. The upper legs 35 have a groove 66 adapted to receive the lower legs 36. A peripheral step 47 forms a seat for the lower springs 27. Projections 48 on the lower case 21 help locate the springs 27. Projections 49 formed on an inner surface of the lower case 21 form support stops for the magnets 31.

The upper case 22, as shown in Figure 6, has a flat upper surface with a central opening 23 and four legs 35 extending downwardly from each corner, each leg 35 engaging the legs 36 of the lower case 21 for interlocking the two casings 21, 22 as described above. The magnet yoke 33 presses the lower springs 27 to the lower case 21 through an intermediate insulator 28.

Figure 7 illustrates one of the lower springs 27. The other spring is a mirror image. Spring 27 has a semi-circular appearance so that when the two springs are laid side by side, they form a complete circle with just a small gap therebetween. The springs 27 have a broad outer edge or rim 52 and a broad inner edge or rim 53 joined together by two thin serpentine fingers 54. The springs are made of a resilient conductive material such as beryllium copper. The outer rim 52 has an integral extension forming the terminal 25. The inner rim 53 of the spring 27 also has a outwardly extending tab 55 to which a lead 56 from the coil 30 is fixed, optionally by spot welding. Adhesive is used to fix the springs 27 to a lower axial end of the lens holder 29. The inner rim 53 of the two springs 27 forms a support collar on which the lens holder 29 sits. Grooves 63 help locate the inner rims 53 of the lower springs 27 and gives lateral support to the inner rims 53.

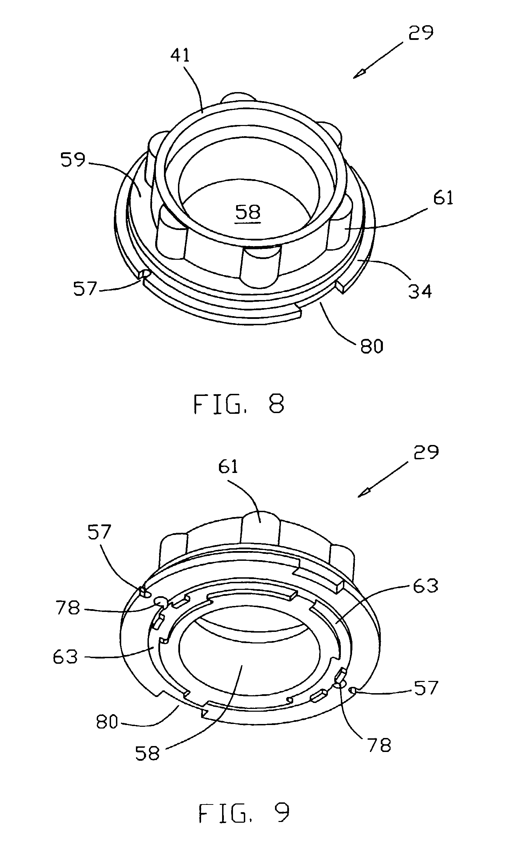

The lens holder 29 is shown in perspective view in Figure 8 and in perspective view from below in Figure 9. The lens holder 29 is basically tubular with the outer circumferentially extending flange 34 on which the coil 30 sits. The flange 34 is located towards the bottom of the lens holder 29 and has two gaps 57 through which the lead wires 56 from the coil 30 extend down to the springs 27. The lens holder 29 has a through opening 58 forming an optical axis. The through opening 58 accommodates the lens (not shown). The outer surface of the upper portion of the lens holder 29 is predominantly right cylindrical with a number of, preferably six, axially extending ribs 61. The ribs 61 form a low friction guide against the inner wall 39 of the magnet yoke 33, should the lens holder 29 tilt or move sideways during use. There is a slight clearance between the ribs 61 and the inner wall 39 of the magnet yoke 33. Flange 34 of the lens holder 29 also has two gaps 80. Projections 81 on the lower case 21 locate within the gaps 80. Thus the lower portion of the lens holder 29 is supported against lateral and rotational movement, especially when in the park position but also during operation.

The coil 30, as shown in Figure 2, is a ring formed by a number of turns of copper wire which may be mounted directly onto the outer surface of the lens holder but preferably is a free standing ring which is pressed onto the outer surface of the lens holder and sits on flange 34. As a free standing ring, the coil 30 may be bound in insulating material and is preferably, impregnated with a resin which holds the turns of the wire together to form a rigid coil. The ends of the coil 30, known as lead wires 56, connect to the springs 27. Preferably, the coil 30 is fixed to the lens holder 29 by adhesive.

As shown in Figures 2 and 3, a ring 28 of insulating material is placed on top of the springs 27 in the lower case 21 allowing the magnet yoke 33 to press the outer rim 52 of the springs 27 against the lower case 21 without short-circuiting the springs 27. The magnet yoke 33 is made of a magnetic material and stainless steel is preferred to resist corrosion.

In use, a lens, being an assembly any number of lens fitted together or just a single lens, is fitted to the bore of the lens holder. The lens module is placed on an image sensor assembly such as a CCD or CMOS image sensor and the lens assembly is moved by moving the lens holder in accordance with control signals from the image sensor controller. The position of the lens holder is controlled by applying current through the coil. As the permanent magnets provide a stationary magnetic field, any current passing through the coil will cause a magnetic force to be generated on the coil, which in turn will apply a force to the lens holder against the force exerted by the springs. The greater the current through the coil, the greater the force being generated and the greater the movement of the lens holder. With no current flowing through the coil, the lens holder is pressed against the lower cushion by the magnetic latch in what is known as the rest or park position. The force applied by the magnetic latch in the rest position can be adjusted to provide a desired holding force of the lens holder against the cushion. As the current increases in the coil, the lens holder is moved towards the upper case until maximum travel is reached, at which point, the upper cushion on the lens holder is being pressed against the lower edge of the inner wall of the magnet yoke.

The force with which the lens holder is moved depends upon the magnetic forces created between the magnet and the coil. The more powerful the magnet or the greater the number of turns of the coil, or a greater current flow through the coil leads to a greater force. The strength of the springs and the mass of the lens holder assembly including the coil and lens, will affect the force required to move the lens and also the speed at which the lens will move. The lighter the lens holder assembly, the faster the response time and thus, quicker the camera module will achieve focus.

While the preferred embodiment has a cushion to support the lens holder in the parked position and a cushion to support the lens holder in the fully extended position, it should be remembered that the cushion for supporting the lens in the fully extended position is optional and would not be used in a low cost version as the occurrence of severe vibration or shock when the lens holder is in the fully extended position, i.e., when taking a close up photograph, is considered very unlikely.

The springs 27 are desirably designed to exert no pressure on the lens holder in the parked position, to give a very rapid response time to current through the coil. This may lead to holding problems in the park position. To overcome this, magnetic pieces may be attached to a lower portion of the lens holder which react with the permanent magnetic field to cause a force of magnetic attraction to assist holding the lens holder in the park position. Indeed, other parts may have magnetic properties to aid park holding force. For example, instead of springs of beryllium copper, springs of a conductive resilient and magnetic material may be used, such that in the park position, the springs provide little to no spring force against the lens holder but a magnetic force acting through the springs assist holding or entirely holds the lens holder in the park position.

By arranging the springs to be relaxed in the park position, the full range of the springs is available for movement of the lens holder. This means that the springs can be more finely tuned to the application.

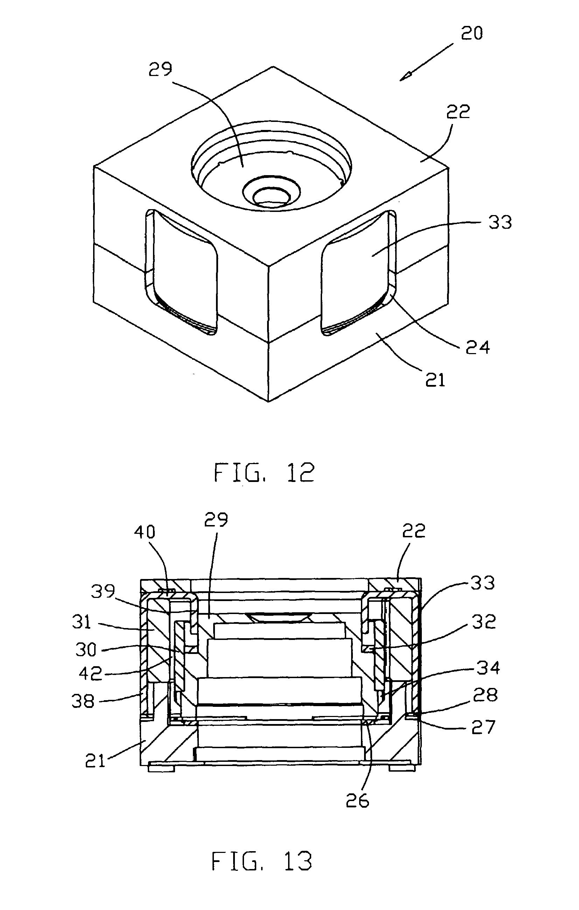

Figures 12 to 19 illustrate a second embodiment of a voice coil motor lens module. Figure 12 shows the assembled lens module 20 which measures 8.5 by 8.5 by 5.8 mm.

A cross-sectional view is shown in Figure 13 which shows the lens holder 29 in the park position.

The module 20 has a two part casing, having a lower case 21 and an upper case 22 accommodating a magnet yoke 33 with permanent magnet means, a lens holder 29, a coil 30 and spring means. A magnetic latch is also provided to retain the lens holder 29 in the park position when the coil 30 is not energized. As in the previous example, a lower cushion 26 is located between the lens holder 29 and the lower case 21 on which the lens holder 29 rests in the park position.

In use, when the coil is energized, the lens holder moves upwardly as shown, towards the upper case 22 until reaching the fully extended position in which the lens holder 29 contacts a lower axial end of the inner wall 39 of the magnet yoke 33. An upper cushion 32 is provided on the lens holder 29 to cushion the impact and to avoid direct contact between the lower end of the inner wall 39 and the lens holder 29 in the axial direction of movement. Preferably, upper cushion 32 is seated on a step 59 formed on the radially outer surface of the lens holder 29, specifically to abut the inner wall 39. Thus movement of the lens holder 29 is limited by contact with the magnet yoke 33.

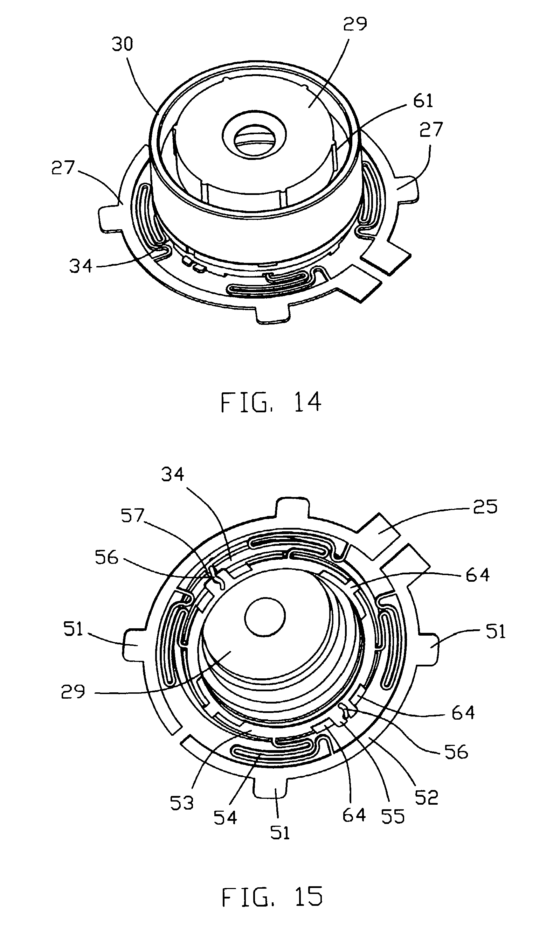

The coil 30 (as shown in Figure 14) is fitted to the radially outer surface of the lens holder and sits on a circumferentially extending flange 34. The coil 30 is fixed to the lens holder 29 so that the two parts move as one. As shown in Figure 13, the coil 30 extends into the magnet yoke 33 in the gap between the magnet means and the inner wall 39 and faces the magnet means across a small air gap 42.

Referring back to Figure 14, the upper portion of the outer surface of the lens holder 29 is substantially right cylindrical with a number of axially extending ribs 61 which form a close tolerance or clearance with the inner wall 39 of the magnet yoke 33. Should the lens holder 29 tilt in use, the ribs 61 provide a low friction rubbing surface.

The spring means comprises two lower springs 27 having an inner rim 53 attached to the lower axial end of the lens holder 29 and an outer rim 52 which attaches to the lower case 21 and held thereto by the magnet yoke 33 and an intervening insulating member 28. At least one, and here shown two, serpentine fingers 54 join the inner and outer rims. The outer rims 52 have integral terminals 25, in the form of lateral extensions for connecting to the power supply via a controller or the like. The terminals 25 preferably connect to a flexible printed circuit board. Projections 64 on the lower end of the lens holder 29 locate the inner rims 53 and prevent the inner rims 53 from touching each other. They also provide the inner rims with lateral support. Preferably, the inner rims 53 are glued to the lens holder.

The flange 34 has a pair of cutouts 57 for passage of lead wires 56 from the coil 30 to connect to the inner rims 53 respectively, at tabs 55.

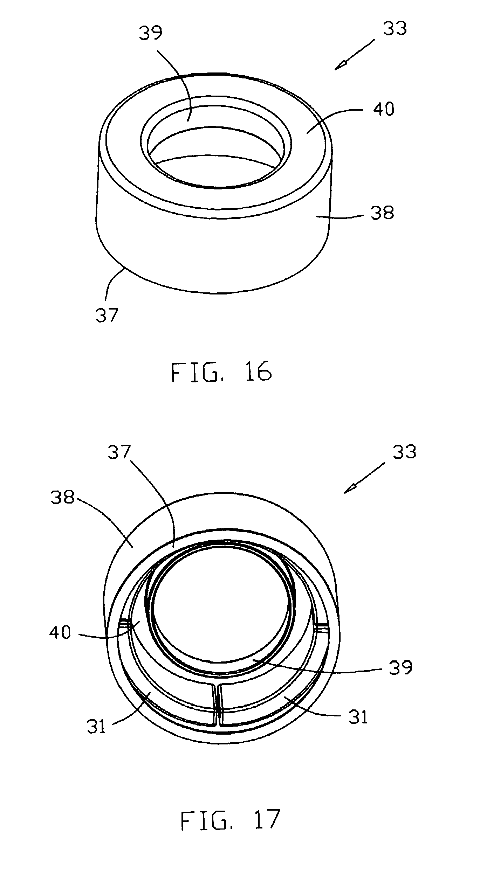

In this embodiment, the outer wall 38 and inner wall 39 of the magnet yoke 33 are right cylindrical. The magnet means may be a single ring magnet or a number of arcuate magnets 31 fitted together on the inner surface of the outer wall 38 to form a ring, as shown in Figure 17.

Projections 49 on the lower case support the magnet or magnets 31 against the top wall 40 of the yoke 33. Corner projections or legs 36 of the lower case 21 mate with corresponding projections 35 of the upper case 22 to hold the module 20 together. Preferably, the corner projections of the upper and lower cases are glued together, although fingers 50 extending from the corner projections of the upper case are shown arranged to be pressed into recesses 79 in the projections 36 of the lower case 21.
This press fit could be sufficient in some applications. Corner tabs 51 on the outer rim 52 of the lower springs 27 locate into the recesses 79 to aid assembly. The fingers 50 can be arranged, if desired, to additionally clamp the lower springs 27 to the lower case 21.

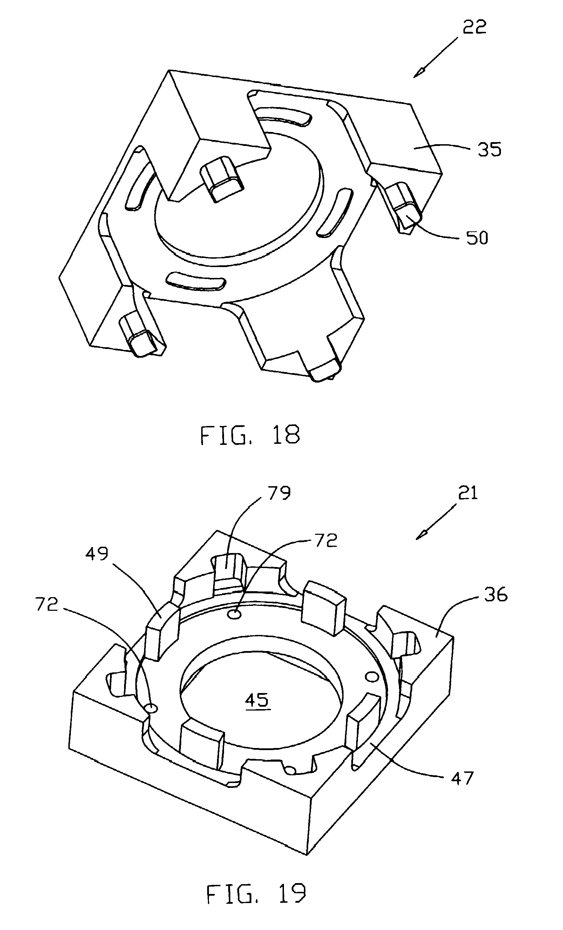

Four holes 72 are shown in the lower case in Figure 19. The holes 72 can be used for receiving small pieces of magnets, or magnet elements 71. These magnet elements 71 are coupled with magnet or magnetic elements 73 similarly located on the lens holder 29. Alternatively, the magnet elements 71 may react directly with the springs 27 if they are of magnetic material, e.g., stainless steel, instead of the usual beryllium copper, or some other magnetic or magnet component of the lens holder assembly. This forms the magnetic latch to hold the lens holder 29 in the park position when the coil 30 is not energised.

By suitable placement of the magnet elements 71 and the steel elements 73, the magnetic latch can be used to deliberately tilt the lens holder in a predetermined manner so that the axial ribs 61 rub on the magnet yoke. This stabilizes the lens holder and prevents small lateral vibrations from occurring, which may otherwise if the lens holder is suspended only by the lower springs.

This can be achieved by using one, two or three magnet elements, by using four magnet elements in which two adjacent elements have a lower attraction than the other two, or by using two diametrically opposed magnet elements with one having a lower attraction than the other.

The difference in attraction can be caused by using different strength magnets or by varying the distance between the attracted components i.e., setting one element lower than the other or by replacing a steel element with a magnet element.

A further variation would be to add an additional magnet element to the lens holder in a position arranged to attract the lens holder to the magnet yoke, e.g. in the step for the upper cushion to react with the lower edge of the inner wall. This may be in conjunction with the magnetic latch.

Various forms of the voice coil motor lens module have been described by way of example only and certain variations and modifications will be readily apparent to those skilled in the art. The scope of the invention is to be determined only by reference to the accompanying claims.

## Claims

1. A lens module for a camera or the like, comprising:
a two part casing (21,22) accommodating a magnet yoke (33), permanent magnet means (31) providing a magnetic field, a lens holder (29) for supporting a lens, a coil (30) and spring means (27),
the casing having an upper case (22) and a lower case (21) and means for interlocking the two cases,
the magnet yoke (33) having an annular form with an outer wall (38) and a right cylindrical inner wall (39) and a top wall (40) joining the inner and outer walls at a top end thereof, the lower end being left open, the axial height of the inner wall (39) being less than the axial height of the outer wall (38),
the permanent magnet means comprising at least one permanent magnet (31) fitted to an inner surface of the outer wall (38),
the lens holder (29) having a through aperture (58) defining an optical axis, the through aperture (58) being arranged to accommodate the lens, the lens holder (29) having an upper axial end (41), a lower axial end and a radially outer surface, the radially outer surface includes at least one step (59) and a circumferentially extending flange (34) located towards the lower axial end, the lens holder (29) being insertable into the magnet yoke (33) such that an upper cylindrical portion of the lens holder confronts an inner surface of the inner wall (39) of the magnet yoke (33) and the lower axial end of the inner wall (39) abuts the step (59) to limit the axial movement of the lens holder (29) through the magnet yoke (33),
the spring means comprises two conductive springs (27) each having an arcuate inner rim (53) attached to the lower axial end of the lens holder (29) and an outer rim (52) attached to the lower case (21) and having a terminal (25) for connecting to a source of power, the inner and outer rims (53,52) being respectively interconnected by at least one serpentine finger (54), wherein the springs (27) are not stressed when the lens holder (29) is in a park position and are stressed when the lens holder (29) is in the fully extended position,
the coil (30) is fitted to the lens holder (29) for movement therewith and lead wires (56) thereof are respectively electrically connected to the inner rims (53) of the springs (27), the coil (30) being located at least partially between the magnet means and the inner wall (39) of the magnet yoke (33),
the magnet yoke (33) being held between the upper and lower cases (22,21) and the outer wall (38) presses the outer rim (52) of the springs (27) to the lower case (21), an insulating member (28) being disposed between the lower axial end of the outer wall (38) and the springs (27) to prevent direct contact there between,
wherein the lens holder (29) is caused to move from the park position to the fully extended position against the urgings of the springs (27) by energising the coil (30).

2. A lens module according to Claim 1, wherein a cushion (32) is disposed between the lens holder (29) and the lower end of the inner wall (39) of the magnet yoke (33) to prevent direct contact there between in the fully extended position.

3. A lens module according to Claim 1 or 2, wherein a park cushion (26) is disposed on the lower (21) case such that in the park position the lens holder (29) rests on the park cushion (26).

4. A lens module according to any one of the preceding claims, wherein the upper cylindrical portion of the lens holder (29) has a plurality of axially extending ribs (61).

5. A lens module according to any one of the preceding claims, wherein a magnetic latch is provided between the lens holder (29) and the lower case (21) to retain the lens holder (29) in the park position when the coil (30) is not energised.

6. A lens module according to Claim 5, wherein the magnetic latch is arranged to cause tilting of the lens holder (29) within the opening formed by the inner wall (39) of the magnet yoke (33).

7. A lens module according to Claim 5 or 6, wherein the magnetic latch comprises a magnet element (71) and a steel element (73).

8. A lens module according to Claim 5 or 6, wherein the magnetic latch comprises a magnet element (71) fixed to the lower case (21) and magnetically attracting a component of the lens holder (29).

9. A lens module according to Claim 8, wherein the component of the lens holder (29) is one of the springs (27) which is of a magnetic, resilient and conductive material.

10. A lens module according to Claim 9, wherein the springs (27) are of stainless steel.

11. A lens module according to any one of the preceding claims, wherein the lens module further comprises a top spring (68) having an inner rim (75) attached to the upper axial end of the lens holder (29) and an outer rim (76) attached to the upper case (22).

12. A lens module according to Claim 11, wherein the outer rim (76) of the top spring (68) is fixed to the upper case (22) by the magnet yoke (33).

13. A lens module according to Claim 12, wherein the outer rim (76) of the top spring (68) is pressed against a ridge on an inner surface of the upper case (22), the ridge creating a void (70) into which the top spring (68) is deformable without contacting other portions of the upper case (22) as the lens holder (29) moves to the fully extended position.

14. A lens module according to any one of the preceding claims, wherein fingers (81) on the lower case (21) mate with grooves (80) in the radially outer surface of the lens holder (29) to guide the lens holder (29) axially and to provide lateral support for the lens holder (29) in the park position.

15. A lens module according to any one of the preceding claims, wherein the at least one magnet are four arcuate magnets (31).

16. A lens module according to Claim 15, wherein the outer wall (38) of the magnet yoke (33) is substantially square with chamfered corners (74) and the four magnets (31) are located at the corners (74).

17. A lens module according to Claim 16, wherein projections (49) on the lower case (21) hold the magnets (31) against an inner surface of the top wall (40) of the magnet yoke (33).

18. A lens module according to Claim 6, wherein the magnetic latch comprises two magnet elements (71) located at diametrically opposed locations on the lower case (21) and attracting two steel elements (73) fixed to the lens holder (29), the tilt being caused by magnetic forces of attraction between the pairs of elements (71,73).

19. A lens module according to Claim 18, wherein the unequal magnetic attraction is caused by using magnet elements (71) of differing magnetic strength.

20. A lens module according to Claim 18, wherein the unequal magnetic attraction is caused by a difference in separation distances between the pairs of elements (71,73).

21. A lens module according to Claim 18, wherein the unequal magnetic attraction is caused by misalignment between the elements (71,73) of one of the pairs of elements (71,73).

22. A lens module according to Claim 6, wherein the tilting of the lens holder (29) is caused by asymmetric placing of components of the magnetic latch.
